# EUROPEAN PATENT APPLICATION

(11) **EP 4 786 331 A1**
(43) Date of publication of application: **05.08.2026**
(21) Application number: 26156435.5
(22) Date of filing: 04.02.2026
(51) Int. Cl.: B64C 11/32, B64C 11/34, F01D 17/16, F04D 29/36

(54) **ASYNCHRONOUS AIRFOIL PITCH ADJUSTMENT FOR AIRCRAFT PROPULSION SYSTEM**

(30) Priority: 04.02.2025 US 202519045291
(71) Applicant: RTX Corporation, Farmington, CT 06032 (US)
(72) Inventor: MORTON, Jeffrey T., Manchester, 06040 (US); CAPRARIO, Joseph T., Rocky Hill, 06067 (US)
(74) Representative: Dehns

(57) **Abstract**

An aircraft propulsion system (20) assembly includes a plurality of airfoils (110) and an actuation system (106). Each of the airfoils (110) projects radially outward from a respective airfoil base (108) to a respective airfoil tip (118). The airfoils (110) include a first airfoil (110) and a second airfoil (110). The actuation system (106) is configured to pivot the first airfoil (110) about a first airfoil pivot axis (128) from a first airfoil first pitch position (129A), through a first airfoil feather pitch position (129C), to a first airfoil second pitch position (129E). The actuation system (106) is configured to pivot the second airfoil (110) about a second airfoil pivot axis (128) from a second airfoil first pitch position (129A), through a second airfoil feather pitch position (129C), to a second airfoil second pitch position (129E). The actuation system (106) is configured to asynchronously schedule pivoting the first airfoil (110) through the first airfoil feather pitch position (129C) with pivoting the second airfoil (110) through the second airfoil feather pitch position (129C).

## Description

### BACKGROUND OF THE INVENTION

### 1. Technical Field

This invention relates generally to an aircraft propulsion system and, more particularly, to airfoil pitch adjustment for the aircraft propulsion system.

### 2. Background Information

Various types and configurations of propulsion systems for an aircraft are known in the art. Various types and configurations of airfoil pitch adjustment mechanisms for an aircraft propulsion system are known in the art. While these known aircraft propulsion systems and airfoil pitch adjustment mechanisms have various benefits, there is still room in the art for improvement.

### SUMMARY OF THE INVENTION

According to an aspect of the present invention, an assembly is provided for an aircraft propulsion system. This assembly includes a plurality of airfoils and an actuation system. The airfoils are arranged circumferentially around a centerline axis in an array. Each of the airfoils projects radially outward from a respective airfoil base to a respective airfoil tip. The airfoils include a first airfoil and a second airfoil. The actuation system is configured to pivot the first airfoil about a first airfoil pivot axis from a first airfoil first pitch position, through a first airfoil feather pitch position, to a first airfoil second pitch position. The actuation system is configured to pivot the second airfoil about a second airfoil pivot axis from a second airfoil first pitch position, through a second airfoil feather pitch position, to a second airfoil second pitch position. The actuation system is configured to asynchronously schedule pivoting the first airfoil through the first airfoil feather pitch position with pivoting the second airfoil through the second airfoil feather pitch position.

Optionally, and in accordance with the above, the first airfoil at the first airfoil first pitch position and the second airfoil at the second airfoil first pitch position may have a common first pitch angle. The actuation system may be configured to synchronously schedule pivoting the first airfoil to the first airfoil first pitch position with pivoting the second airfoil to the second airfoil first pitch position.

Optionally, and in accordance with any of the above, the first airfoil at the first airfoil second pitch position and the second airfoil at the second airfoil second pitch position may have a common second pitch angle. The actuation system may be configured to synchronously schedule pivoting the first airfoil to the first airfoil second pitch position with pivoting the second airfoil to the second airfoil second pitch position.

Optionally, and in accordance with any of the above, the actuation system may be configured to pivot the first airfoil about the first airfoil pivot axis from the first airfoil first pitch position, through a first airfoil first intermediate pitch position, to the first airfoil feather pitch position. The actuation system may be configured to pivot the second airfoil about the second airfoil pivot axis from the second airfoil first pitch position, through a second airfoil first intermediate pitch position, to the second airfoil feather pitch position. The actuation system may be configured to synchronously schedule pivoting the first airfoil through the first airfoil first intermediate pitch position with pivoting the second airfoil through the second airfoil first intermediate pitch position. The first airfoil at the first airfoil first intermediate pitch position and the second airfoil at the second airfoil first intermediate pitch position may have a common first intermediate pitch angle.

Optionally, and in accordance with any of the above, the actuation system may be configured to pivot the first airfoil about the first airfoil pivot axis from the first airfoil feather pitch position, through a first airfoil second intermediate pitch position, to the first airfoil second pitch position. The actuation system may be configured to pivot the second airfoil about the second airfoil pivot axis from the second airfoil feather pitch position, through a second airfoil second intermediate pitch position, to the second airfoil second pitch position. The actuation system may be configured to synchronously schedule pivoting the first airfoil through the first airfoil second intermediate pitch position with pivoting the second airfoil through the second airfoil second intermediate pitch position. The first airfoil at the first airfoil second intermediate pitch position and the second airfoil at the second airfoil second intermediate pitch position may have a common second intermediate pitch angle.

Optionally, and in accordance with any of the above, the first airfoil may circumferentially neighbor the second airfoil within the array.

Optionally, and in accordance with any of the above, the airfoils may also include a third airfoil with the second airfoil circumferentially between and next to the first airfoil and the third airfoil. The actuation system may be configured to pivot the third airfoil about a third airfoil pivot axis from a third airfoil first pitch position, through a third airfoil feather pitch position, to a third airfoil second pitch position. The actuation system may be configured to asynchronously schedule pivoting the third airfoil through the third airfoil feather pitch position with pivoting the second airfoil through the second airfoil feather pitch position.

Optionally, and in accordance with any of the above, the actuation system may be configured to synchronously schedule pivoting the third airfoil through the third airfoil feather pitch position with pivoting the first airfoil through the first airfoil feather pitch position.

Optionally, and in accordance with any of the above, the actuation system may be configured to asynchronously schedule pivoting the third airfoil through the third airfoil feather pitch position with pivoting the first airfoil through the first airfoil feather pitch position.

Optionally, and in accordance with any of the above, the airfoils may also include a fourth airfoil with the third airfoil circumferentially between and next to the second airfoil and the fourth airfoil. The actuation system may be configured to pivot the fourth airfoil about a fourth airfoil pivot axis from a fourth airfoil first pitch position, through a fourth airfoil feather pitch position, to a fourth airfoil second pitch position. The actuation system may be configured to asynchronously schedule pivoting the fourth airfoil through the fourth airfoil feather pitch position with pivoting the third airfoil through the third airfoil feather pitch position.

Optionally, and in accordance with any of the above, the actuation system may be configured to: asynchronously schedule pivoting the third airfoil through the third airfoil feather pitch position with pivoting the first airfoil through the first airfoil feather pitch position; and synchronously schedule pivoting the fourth airfoil through the fourth airfoil feather pitch position with pivoting the first airfoil through the first airfoil feather pitch position.

Optionally, and in accordance with any of the above, the actuation system may be configured to: asynchronously schedule pivoting the third airfoil through the third airfoil feather pitch position with pivoting the first airfoil through the first airfoil feather pitch position; and asynchronously schedule pivoting the fourth airfoil through the fourth airfoil feather pitch position with: pivoting the first airfoil through the first airfoil feather pitch position; and/or pivoting the second airfoil through the second airfoil feather pitch position.

Optionally, and in accordance with any of the above, the airfoils may also include a fifth airfoil with the fourth airfoil circumferentially between and next to the third airfoil and the fifth airfoil. The actuation system may be configured to pivot the fifth airfoil about a fifth airfoil pivot axis from a fifth airfoil first pitch position, through a fifth airfoil feather pitch position, to a fifth airfoil second pitch position. The actuation system may be configured to synchronously schedule pivoting the fifth airfoil through the fifth airfoil feather pitch position with pivoting the first airfoil through the first airfoil feather pitch position.

Optionally, and in accordance with any of the above, the assembly may also include a propulsor rotor and a turbine engine core. The propulsor rotor may include the airfoils. The turbine engine core may be configured to power rotation of the propulsor rotor about the centerline axis. The turbine engine core may include a flowpath, a compressor section, a combustor section and a turbine section. The flowpath may extend through the compressor section, the combustor section and the turbine section from an airflow inlet into the flowpath to a combustion products exhaust from the flowpath.

Optionally, and in accordance with any of the above, the assembly may also include an open propulsor rotor rotatable about the centerline axis. The open propulsor rotor may include the airfoils.

According to another aspect of the present invention, another assembly is provided for an aircraft propulsion system. This assembly includes a plurality of airfoils and an actuation system. The airfoils are arranged circumferentially around a centerline axis in an array. Each of the airfoils projects radially outward from a respective airfoil base to a respective airfoil tip. The airfoils include a first airfoil, a second airfoil and a third airfoil. The second airfoil is arranged circumferentially between and next to the first airfoil and the third airfoil within the array. The actuation system is configured to pivot the first airfoil about a first airfoil pivot axis from a first airfoil first pitch position, through a first airfoil first intermediate pitch position, to a first airfoil second pitch position. The actuation system is configured to pivot the second airfoil about a second airfoil pivot axis from a second airfoil first pitch position, through a second airfoil first intermediate pitch position, to a second airfoil second pitch position. The actuation system is configured to pivot the third airfoil about a third airfoil pivot axis from a third airfoil first pitch position, through a third airfoil first intermediate pitch position, to a third airfoil second pitch position. The first airfoil at the first airfoil first intermediate pitch position, the second airfoil at the second airfoil first intermediate pitch position and the third airfoil at the third airfoil first intermediate pitch position have a common first intermediate pitch angle. The actuation system is configured to asynchronously schedule (a) pivoting the first airfoil through the first airfoil first intermediate pitch position towards the first airfoil second pitch position with (b) pivoting the second airfoil through the second airfoil first intermediate pitch position towards the second airfoil second pitch position and (c) pivoting the third airfoil through the third airfoil first intermediate pitch position towards the third airfoil second pitch position such that (i) the first airfoil pivots through the first airfoil first intermediate pitch position before the second airfoil pivots through the second airfoil first intermediate pitch position and (ii) the second airfoil pivots through the second airfoil first intermediate pitch position before the third airfoil pivots through the third airfoil first intermediate pitch position.

Optionally, and in accordance with the above, the first airfoil first intermediate pitch position may be a first airfoil feather pitch position. The second airfoil first intermediate pitch position may be a second airfoil feather pitch position. The third airfoil first intermediate pitch position may be a third airfoil feather pitch position.

Optionally, and in accordance with any of the above, the first airfoil first intermediate pitch position may be a first airfoil flat pitch position. The second airfoil first intermediate pitch position may be a second airfoil flat pitch position. The third airfoil first intermediate pitch position may be a third airfoil flat pitch position.

Optionally, and in accordance with any of the above, the airfoils may also include a fourth airfoil. The third airfoil may be arranged circumferentially between and next to the second airfoil and the fourth airfoil within the array. The actuation system may be configured to pivot the fourth airfoil about a fourth airfoil pivot axis from a fourth airfoil first pitch position, through a fourth airfoil first intermediate pitch position, to a fourth airfoil second pitch position. The fourth airfoil at the fourth airfoil first intermediate pitch position may have the common first intermediate pitch angle. The actuation system may also be configured to synchronously schedule pivoting the fourth airfoil through the fourth airfoil first intermediate pitch position with the pivoting of the first airfoil through the first airfoil first intermediate pitch position.

Optionally, and in accordance with any of the above, the airfoils may also include a fourth airfoil. The third airfoil may be arranged circumferentially between and next to the second airfoil and the fourth airfoil within the array. The actuation system may be configured to pivot the fourth airfoil about a fourth airfoil pivot axis from a fourth airfoil first pitch position, through a fourth airfoil first intermediate pitch position, to a fourth airfoil second pitch position. The fourth airfoil at the fourth airfoil first intermediate pitch position may have the common first intermediate pitch angle. The actuation system may also be configured to asynchronously schedule pivoting the fourth airfoil through the fourth airfoil first intermediate pitch position towards the fourth airfoil second pitch position such that the third airfoil pivots through the third airfoil first intermediate pitch position before the fourth airfoil pivots through the fourth airfoil first intermediate pitch position.

According to another aspect of the present invention, another assembly is provided for an aircraft propulsion system. This assembly includes a plurality of airfoils and an actuation system. The airfoils are arranged circumferentially around a centerline axis in an array. Each of the airfoils projects radially outward from a respective airfoil base to a respective airfoil tip. The airfoils include a first airfoil, a second airfoil and a third airfoil. The second airfoil is arranged circumferentially between and next to the first airfoil and the third airfoil within the array. The actuation system is configured to pivot the first airfoil about a first airfoil pivot axis from a first airfoil first pitch position, through a first airfoil first intermediate pitch position, to a first airfoil second pitch position. The actuation system is configured to pivot the second airfoil about a second airfoil pivot axis from a second airfoil first pitch position, through a second airfoil first intermediate pitch position, to a second airfoil second pitch position. The actuation system is configured to pivot the third airfoil about a third airfoil pivot axis from a third airfoil first pitch position, through a third airfoil first intermediate pitch position, to a third airfoil second pitch position. The first airfoil at the first airfoil first intermediate pitch position, the second airfoil at the second airfoil first intermediate pitch position and the third airfoil at the third airfoil first intermediate pitch position have a common first intermediate pitch angle. The actuation system is configured to asynchronously schedule (a) pivoting the first airfoil through the first airfoil first intermediate pitch position towards the first airfoil second pitch position with (b) pivoting the second airfoil through the second airfoil first intermediate pitch position towards the second airfoil second pitch position and (c) pivoting the third airfoil through the third airfoil first intermediate pitch position towards the third airfoil second pitch position such that (i) the first airfoil pivots through the first airfoil first intermediate pitch position before the second airfoil pivots through the second airfoil first intermediate pitch position and before the third airfoil pivots through the third airfoil first intermediate pitch position and (ii) the third airfoil pivots through the third airfoil first intermediate pitch position before the second airfoil pivots through the second airfoil first intermediate pitch position.

Optionally, and in accordance with the above, the airfoils may also include a fourth airfoil. The third airfoil may be arranged circumferentially between and next to the second airfoil and the fourth airfoil within the array. The actuation system may be configured to pivot the fourth airfoil about a fourth airfoil pivot axis from a fourth airfoil first pitch position, through a fourth airfoil first intermediate pitch position, to a fourth airfoil second pitch position. The fourth airfoil at the fourth airfoil first intermediate pitch position may have the common first intermediate pitch angle. The actuation system may also be configured to asynchronously schedule pivoting the fourth airfoil through the fourth airfoil first intermediate pitch position towards the fourth airfoil second pitch position such that the second airfoil pivots through the second airfoil first intermediate pitch position before the fourth airfoil pivots through the fourth airfoil first intermediate pitch position.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a propulsion system for an aircraft.
FIG. 2 is a partial schematic illustration of an airfoil system.
FIG. 3 is a schematic illustration of an airfoil array structure.
FIG. 4 is a sectional illustration of a structure airfoil.
FIGS. 5A-E are sectional illustrations of the structure airfoil at various pitch positions.
FIG. 6 is a schematic illustration of the airfoil array structure with two sets of the structure airfoils.
FIG. 7 is a graphical representation of pitch schedules for the two sets of the structure airfoils of FIG. 6.
FIGS. 8A and 8B are partial schematic illustrations of the airfoil array structure with its two sets of the structure airfoils asynchronously arranged at various pitch positions.
FIG. 9 is a schematic illustration of the airfoil array structure with three sets of the structure airfoils.
FIG. 10 is a graphical representation of pitch schedules for the three sets of the structure airfoils of FIG. 9.
FIG. 11 is a schematic illustration of the airfoil array structure with four sets of the structure airfoils.
FIG. 12 is a graphical representation of pitch schedules for the four sets of the structure airfoils of FIG. 11.
FIG. 13 is a graphical representation of alternative pitch schedules for the four sets of the structure airfoils of FIG. 11.
FIGS. 14A-C are partial schematic illustrations of various airfoil actuation system arrangements for the structure airfoils.
FIGS. 15A and 15B are partial schematic illustrations of various coupler arrangements between an actuator and the structure airfoils.
FIG. 16 is a sectional illustration of the structure airfoil in another pitch position.

### DETAILED DESCRIPTION

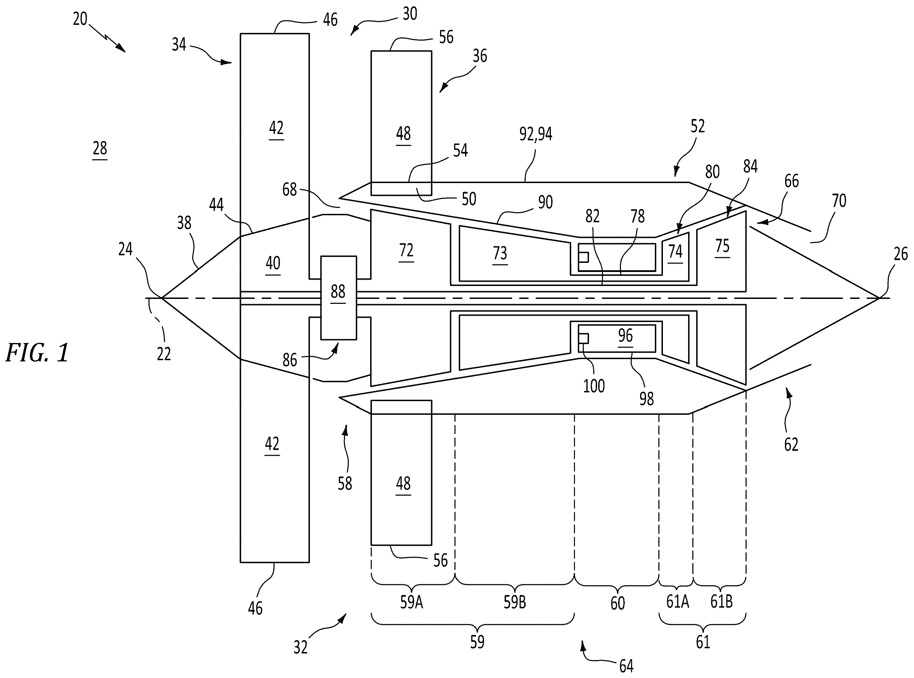

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 extends axially along an axis 22 between an upstream, forward end 24 of the aircraft propulsion system 20 and a downstream, aft end 26 of the aircraft propulsion system 20. The propulsion system axis 22 may be a centerline axis of the aircraft propulsion system 20 and/or a centerline axis of one or more members of the aircraft propulsion system 20. The propulsion system axis 22 may also or alternatively be a rotational axis of one or more members of the aircraft propulsion system 20.

The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 28 (e.g., an ambient environment) external to the aircraft propulsion system 20 and, more generally, the aircraft. The aircraft propulsion system 20 of FIG. 1, for example, includes an open rotor propulsion section 30 and a gas turbine engine 32.

The propulsion section 30 of FIG. 1 includes an open propulsor rotor 34 and an open guide vane structure 36. These propulsion section members 34 and 36 are un-ducted components of the aircraft propulsion system 20 and its propulsion section 30. The propulsion section 30 of FIG. 1 also includes a nose cone 38 disposed at (e.g., on, adjacent or proximate) the propulsion system forward end 24. Briefly, this nose cone 38 may be configured as a spinner which is rotatable with the propulsor rotor 34 about the propulsion system axis 22. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 22 in an array; e.g., a circular array. This array of the propulsor blades 42 may be unshrouded or alternatively shrouded by a tubular propulsor rotor shroud dedicated to the propulsor rotor 34 for example. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 22) out from an exterior surface 44 of the rotor base 40, into the external environment 28, to a distal tip 46 of the respective propulsor blade 42. Here, the exterior surface 44 radially borders the external environment 28 and forms an inner platform surface of the propulsor rotor 34. Each propulsor blade 42 is thereby configured as an un-ducted propulsor blade which is exposed to (e.g., disposed in) the surrounding external environment 28.

The guide vane structure 36 includes a plurality of open exit guide vanes 48 (e.g., airfoils). These guide vanes 48 are arranged and may be equispaced circumferentially about the propulsion system axis 22 in an array; e.g., a circular array. This array of the guide vanes 48 may be unshrouded or alternatively shrouded by a tubular guide vane shroud dedicated to the guide vane structure 36 for example. The guide vane structure 36 and its guide vanes 48 are arranged axially next to (e.g., adjacent) the propulsor rotor 34 and its propulsor blades 42. The guide vane structure 36 and its guide vanes 48 of FIG. 1, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 48 of FIG. 1 is coupled to a support structure 50 of a stationary housing structure 52 for the aircraft propulsion system 20. This support structure 50 may be configured as or otherwise include a support frame, a case and/or another fixed structure of the housing structure 52. Each of the guide vanes 48 projects spanwise along a span line of the respective guide vane 48 (e.g., radially relative to the propulsion system axis 22) out from an exterior surface 54 of the housing structure 52, into the external environment 28, to a distal tip 56 of the respective guide vane 48. Here, the exterior surface 54 radially borders the external environment 28 and forms an exterior aerodynamic flow surface. Each guide vane 48 is thereby configured as an un-ducted guide vane which is exposed to (e.g., disposed in) the surrounding external environment 28.

The aircraft propulsion system 20 and its turbine engine 32 include an inlet section 58, a compressor section 59, a combustor section 60, a turbine section 61 and an exhaust section 62. The compressor section 59 of FIG. 1 includes a low pressure compressor (LPC) section 59A and a high pressure compressor (HPC) section 59B. The turbine section 61 of FIG. 1 includes a high pressure turbine (HPT) section 61A and a low pressure turbine (LPT) section 61B. At least (or only) the LPC section 59A, the HPC section 59B, the combustor section 60, the HPT section 61A and the LPT section 61B collectively form a core 64 (e.g., a gas generator) of the turbine engine 32. The aircraft propulsion system 20 and its turbine engine 32 also include an engine flowpath 66; e.g., annular core flowpath. The engine flowpath 66 of FIG. 1 extends longitudinally through the turbine engine 32 and its engine core 64 from an airflow inlet 68 (e.g., an inlet orifice) into the engine flowpath 66 to a combustion products exhaust 70 (e.g., an exhaust orifice) from the engine flowpath 66. The flowpath inlet 68 is also an airflow inlet into the aircraft propulsion system 20 of FIG. 1 and its turbine engine 32. The flowpath exhaust 70 is also a combustion products exhaust from the aircraft propulsion system 20 of FIG. 1 and its turbine engine 32.

The LPC section 59A includes a bladed low pressure compressor (LPC) rotor 72. The HPC section 59B includes a bladed high pressure compressor (HPC) rotor 73. The HPT section 61A includes a bladed high pressure turbine (HPT) rotor 74. The LPT section 61B includes a bladed low pressure turbine (LPT) rotor 75. Each of these engine rotors 72-75 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 66. Each of the rotor blades is connected to the respective rotor base. Each of the rotor blades projects radially (e.g., spanwise) out from the respective rotor base into the engine flowpath 66 and to a distal tip of the respective rotor blade.

The HPC rotor 73 is coupled to and rotatable with the HPT rotor 74. The HPC rotor 73 of FIG. 1, for example, is connected to the HPT rotor 74 by a high speed shaft 78. At least (or only) the HPC rotor 73, the HPT rotor 74 and the high speed shaft 78 collectively form a high speed rotating structure 80; e.g., a high speed spool of the turbine engine 32 and its engine core 64. This high speed rotating structure 80 of FIG. 1 and its members 73, 74 and 78 are rotatable about the propulsion system axis 22. However, in other embodiments, the high speed rotating structure 80 and its members 73, 74 and 78 may alternatively be rotatable about another rotational axis which is (e.g., radially and/or angularly) offset from the rotational axis of the propulsor rotor 34.

The LPC rotor 72 is coupled to and rotatable with the LPT rotor 75. The LPC rotor 72 of FIG. 1, for example, is connected to the LPT rotor 75 by a low speed shaft 82. At least (or only) the LPC rotor 72, the LPT rotor 75 and the low speed shaft 82 collectively form a low speed rotating structure 84; e.g., a low speed spool of the turbine engine 32 and its engine core 64. This low speed rotating structure 84 of FIG. 1 and its members 72, 75 and 82 are rotatable about the propulsion system axis 22. However, in other embodiments, the low speed rotating structure 84 and its members 72, 75 and 82 may alternatively be rotatable about another rotational axis which is (e.g., radially and/or angularly) offset from the rotational axis of the propulsor rotor 34.

The low speed rotating structure 84 is coupled to the propulsor rotor 34 through a drivetrain 86. This drivetrain 86 may be configured as a geared drivetrain, where a geartrain 88 (e.g., a transmission, a speed change device, an epicyclic geartrain, etc.) is disposed between and operatively couples the propulsor rotor 34 to the low speed rotating structure 84 and its LPT rotor 75. With this arrangement, the propulsor rotor 34 may rotate at a different (e.g., slower) rotational speed than the low speed rotating structure 84 and its LPT rotor 75. Here, the propulsor rotor 34 and the low speed rotating structure 84 may rotate in a common (the same) direction about the propulsion system axis 22 or in opposite directions about the propulsion system axis 22 depending, for example, upon the specific configuration of the geartrain 88. Alternatively, the drivetrain 86 may be configured as a direct-drive drivetrain, where the geartrain 88 is omitted. With such an arrangement, the propulsor rotor 34 rotates at a common (the same) rotational speed as the low speed rotating structure 84 and its LPT rotor 75.

The engine sections 58-62 of FIG. 1 are arranged sequentially along the propulsion system axis 22 and are housed within and/or formed by the housing structure 52. This housing structure 52 includes an engine case 90 (e.g., a gas generator case) and a propulsion system nacelle 92. The engine case 90 houses one or more of the engine sections 59A-61B; e.g., the engine core 64. The engine case 90 of FIG. 1, for example, extends axially along (e.g., axially overlaps) and extends circumferentially about (e.g., circumscribes) the engine sections 59A-61B and the engine rotors 72-75. The engine case 90 may also house the geartrain 88. The propulsion system nacelle 92 houses and provides an aerodynamic cover over the engine case 90. An exterior wall 94 of the propulsion system nacelle 92 of FIG. 1, for example, is disposed radially outboard of, extends axially along (e.g., axially overlaps) and extends circumferentially about (e.g., circumscribes) the engine core 64 and its engine case 90. This nacelle wall 94 may at least partially or completely form the exterior surface 54. With the foregoing arrangement, the engine rotors 72-75 are disposed within the housing structure 52. By contrast, the propulsor rotor 34 and the guide vane structure 36 are disposed at least partially (or completely) outside of the housing structure 52.

During forward thrust operation of the aircraft propulsion system 20 of FIG. 1, ambient air within the external environment 28 is propelled by the rotating propulsor rotor 34 in the downstream, aft direction towards the propulsion system aft end 26. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 34 flows axially across the guide vane structure 36 and outside of the housing structure 52 and its exterior surface 54; e.g., along an exterior of the propulsion system nacelle 92. The guide vane structure 36 conditions (e.g., straightens out, de-swirls, etc.) the outer stream of air within the external environment 28 to enhance the forward thrust. By contrast, an inner stream of the air propelled by the rotating propulsor rotor 34 may bypass the guide vane structure 36 and enter the turbine engine 32 and its engine flowpath 66 through the flowpath inlet 68.

The air entering the engine flowpath 66 through the flowpath inlet 68 may be referred to as "core air". This core air is compressed by the LPC rotor 72 and the HPC rotor 73 and directed into a combustion chamber 96 (e.g., an annular combustion chamber) of a combustor 98 (e.g., an annular combustor) in the combustor section 60. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 74 and the LPT rotor 75. The rotation of the HPT rotor 74 and the LPT rotor 75 respectively drive rotation of the HPC rotor 73 and the LPC rotor 72 and, thus, compression of the core air. The rotation of the LPT rotor 75 also drives the rotation of the propulsor rotor 34 through the drivetrain 86. The turbine engine 32 and its low speed rotating structure 84 thereby power operation of (e.g., drive rotation of) the propulsor rotor 34 through the drivetrain 86 during aircraft propulsion system operation.

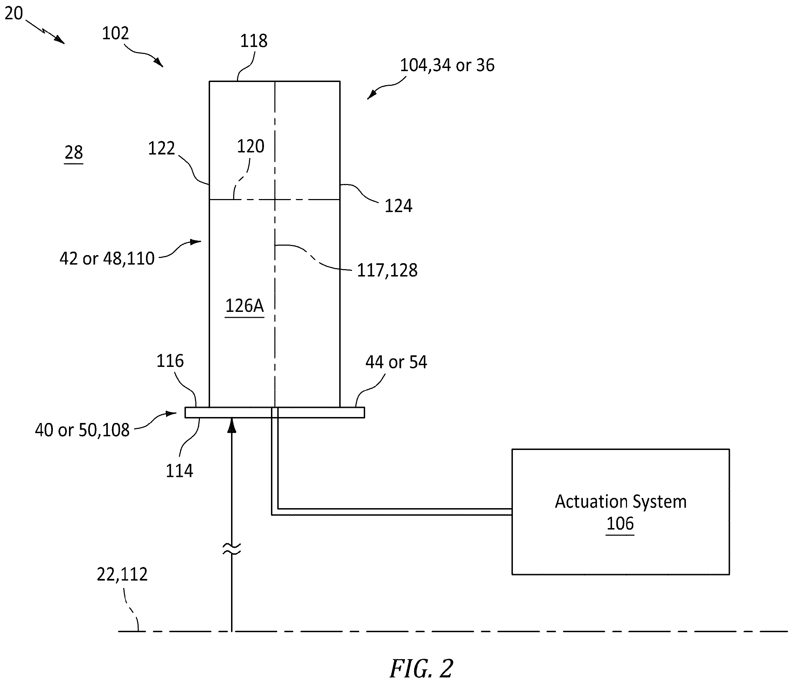

FIG. 2 illustrates an airfoil system 102 for the aircraft propulsion system 20 of FIG. 1. The airfoil system 102 of FIG. 2 includes an airfoil array structure 104 and an airfoil actuation system 106. The airfoil array structure 104 includes at least (or only) a structure base 108 and a plurality of structure airfoils 110. For ease of description, the airfoil array structure 104 may be described below as the propulsor rotor 34 of FIG. 1, where (a) the rotor base 40 is configured as or otherwise includes the structure base 108 and (b) each propulsor blade 42 is configured as or otherwise includes a respective one of the structure airfoils 110. The present invention, however, is not limited to such an exemplary arrangement. For example, the airfoil array structure 104 may alternatively be configured as the guide vane structure 36 of FIG. 1, where (a) the support structure 50 is configured as or otherwise includes the structure base 108 and (b) each guide vane 48 is configured as or otherwise includes a respective one of the structure airfoils 110.

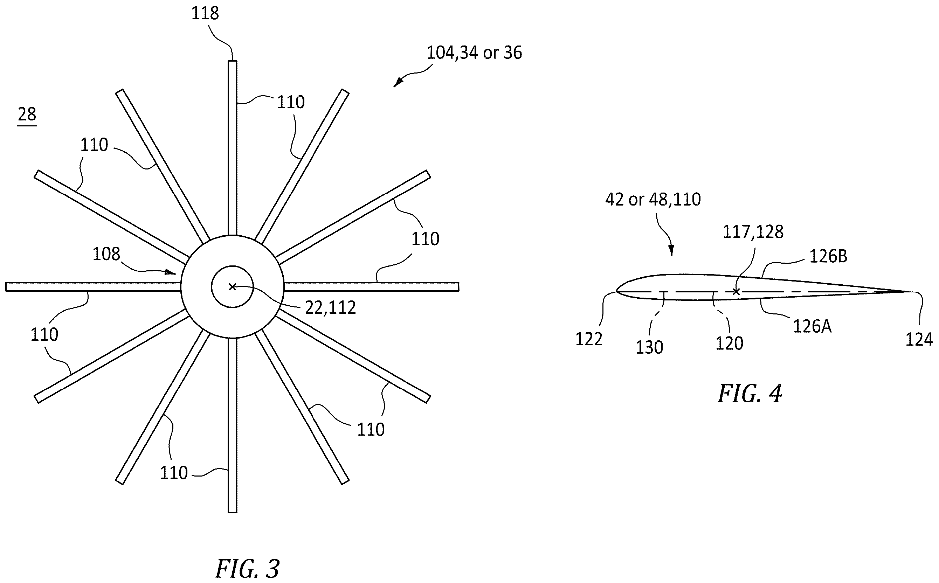

The structure base 108 extends axially along an axis 112 of the airfoil array structure 104; e.g., the propulsion system axis 22. Briefly, the structure axis 112 may be a centerline axis of the airfoil array structure 104. The structure axis 112 may also or alternatively be a rotational axis of the airfoil array structure 104 where the airfoil array structure 104 is a rotating structure such as the propulsor rotor 34. The structure base 108 extends radially from a radial inner side 114 of the structure base 108 to a radial outer side 116 of the structure base 108. The base outer side 116 may define an exterior surface of the aircraft propulsion system 20; e.g., the exterior surface 44, 54 of FIG. 1. Referring to FIG. 3, the structure base 108 extends circumferentially about (e.g., completely around) the structure axis 112. The structure base 108 of FIG. 3 may thereby have a full-hoop (e.g., annular) body.

The structure airfoils 110 are arranged and may be equispaced circumferentially around the structure base 108 and the structure axis 112 in an annular array; e.g., a circular array. Each of the structure airfoils 110 is pivotally mounted to the structure base 108. Referring to FIG. 2, each of the structure airfoils 110 projects spanwise along a span line 117 of the respective structure airfoil 110 (e.g., generally radially relative to the structure axis 112) out from the structure base 108 and its base outer side 116 to a tip 118 of the respective structure airfoil 110. Referring to FIG. 4, each structure airfoil 110 extends longitudinally along a mean line 120 (e.g., a camber line) of the respective structure airfoil 110 from a first edge 122 (e.g., a forward thrust leading edge) of the respective structure airfoil 110 to a second edge 124 (e.g., a forward thrust trailing edge) of the respective structure airfoil 110. Each structure airfoil 110 extends laterally between and to opposing exterior sides 126A and 126B (generally referred to as "126") of the respective structure airfoil 110. Each of these airfoil exterior sides 126 extends longitudinally along the airfoil mean line 120 between and meet at the respective airfoil first edge 122 and the respective airfoil second edge 124. Referring to FIG. 2, each airfoil element 122, 124, 126A and 126B (the airfoil second exterior side 126B not visible in FIG. 2) extends spanwise from the base outer side 116 to the respective airfoil tip 118.

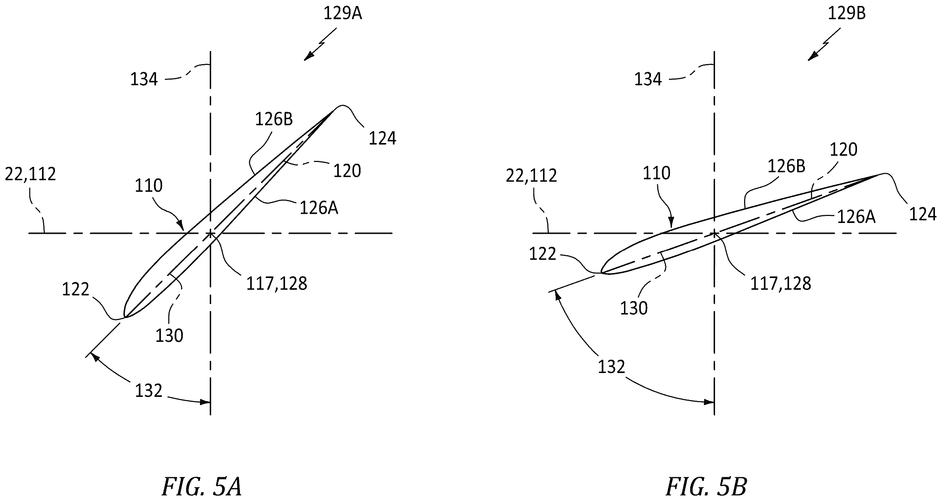

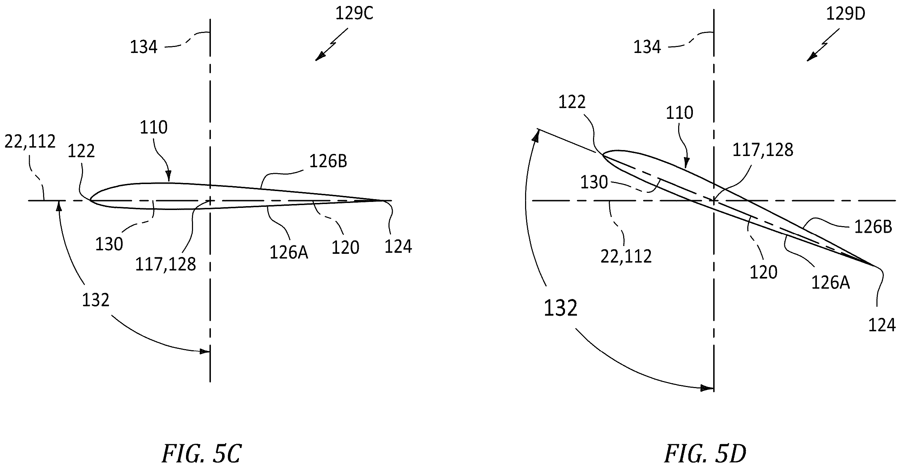

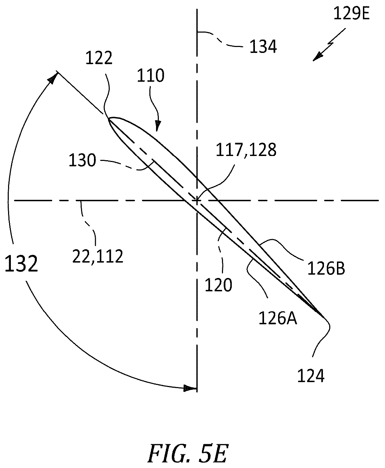

Each structure airfoil 110 may be operatively coupled to the airfoil actuation system 106. This airfoil actuation system 106 is configured to pivot each structure airfoil 110 coupled thereto about a pivot axis 128 of the respective structure airfoil 110. For example, referring to FIGS. 5A-E, the airfoil actuation system 106 may pivot each structure airfoil 110 about its airfoil pivot axis 128 between at least (or only) a forward thrust pitch position 129A (see FIG. 5A) and a reverse thrust pitch position 129E (see FIG. 5E). As each structure airfoil 110 pivots between the forward thrust pitch position 129A of FIG. 5A and the reverse thrust pitch position 129E of FIG. 5E, that structure airfoil 110 pivots about its airfoil pivot axis 128 through various intermediate pitch positions some of which are shown in FIGS. 5B-D. For example, each structure airfoil 110 may pivot from the forward thrust pitch position 129A of FIG. 5A, through a transition forward thrust pitch position 129B (see FIG. 5B), to a feather pitch position 129C (see FIG. 5C). Each structure airfoil 110 may further pivot from the feather pitch position 129C of FIG. 5C, through a transition reverse thrust pitch position 129D (see FIG. 5D) to the reverse thrust pitch position 129E of FIG. 5E, and vice versa. In the feather pitch position 129C of FIG. 5C, the respective structure airfoil 110 may be arranged substantially parallel with the structure axis 112. For example, a chord line 130 of the respective structure airfoil 110 may be exactly or approximately (e.g., within +/- one degree) parallel with the structure axis 112. This chord line 130 of FIG. 5C is a straight line extending from the airfoil first edge 122 to the airfoil second edge 124. The present invention, of course, is not limited to the airfoil movement range exemplified in FIGS. 5A-E. Each structure airfoil 110, for example, may (or may not) pivot past the forward thrust pitch position 129A of FIG. 5A in a first pivot direction away from the feather pitch position 129C of FIG. 5C and/or may (or may not) pivot past the reverse thrust pitch position 129E of FIG. 5E in a second pivot direction away from the feather pitch position 129C of FIG. 5C.

By pivoting the respective structure airfoil 110 about its airfoil pivot axis 128, a pitch 132 of the respective structure airfoil 110 may be changed; e.g., increased or decreased. This airfoil pitch 132 may be measured as an angle between the respective airfoil mean line 120 at the respective airfoil first edge 122 and a reference plane 134 perpendicular to the structure axis 112. Examples of the reference plane 134 include, but are not limited to, a plane of rotation of the airfoil array structure 104, a face plane defined by the airfoil first edges 122, and/or a face plane defined by the airfoil second edges 124. The airfoil actuation system 106 (see FIG. 2) may pivot each structure airfoil 110 to the forward thrust pitch position 129A of FIG. 5A (or another pitch position to that side of the feather pitch position 129C) to facilitate forward thrust operation of the aircraft propulsion system 20; e.g., operation when the propulsion system thrust is directed axially towards the propulsion system aft end 26 of FIG. 1 as described above. By contrast, the airfoil actuation system 106 (see FIG. 2) may pivot each structure airfoil 110 to the reverse thrust pitch position 129E of FIG. 5E (or another pitch position to that side of the feather pitch position 129C) to facilitate reverse thrust operation of the aircraft propulsion system 20; e.g., operation when the propulsion system thrust is directed axially towards the propulsion system forward end 24 of FIG. 1. Moreover, the airfoil actuation system 106 (see FIG. 2) may (e.g., slightly) pivot each structure airfoil 110 to various pitch positions to one side of the feather pitch position 129C during the forward thrust operation and/or the reverse thrust operation to tune various parameters; e.g., propulsion system thrust output, propulsion system efficiency, stress on the structure airfoils 110, etc.

Where the airfoil array structure 104 of FIG. 2 is a rotating structure such as the propulsor rotor 34 of FIG. 1, this rotating airfoil array structure 104 may be subject to a temporary torque spike and/or a temporary drop in rotational speed (e.g., speed droop) if all of the structure airfoils 110 were to synchronously (e.g., concurrently) pivot through the feather pitch position 129C of FIG. 5C. The torque spike may subject the structure airfoils 110 as well as other rotating members coupled to the rotating airfoil array structure 104 (e.g., the drivetrain 86 and its geartrain 88 of FIG. 1) to increased loads and internal stresses. The drop in rotational speed may reduce propulsion system response time as the rotating airfoil array structure 104 may need to accelerate following the drop in speed to provide a designated thrust level. To reduce or substantially eliminate such a torque spike and/or such a drop in rotational speed when pivoting the structure airfoils 110 from between the forward thrust pitch position 129A of FIG. 5A and the reverse thrust pitch position 129E of FIG. 5E, the airfoil actuation system 106 of FIG. 2 is configured to asynchronously schedule airfoil pivoting through the feather pitch position 129C of FIG. 5C. More particularly, the airfoil actuation system 106 of FIG. 2 is configured to pivot the structure airfoils 110 such that not all of the structure airfoils 110 pass through their respective feather pitch positions 129C at the same time. Rather, the movement of the structure airfoils 110 through the feather pitch positions 129C is scheduled into multiple stages.

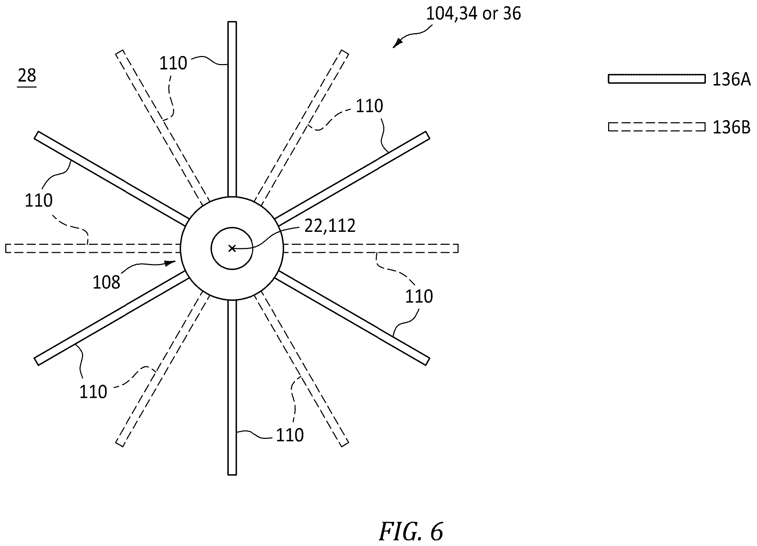

Referring to FIG. 6, the structure airfoils 110 in the array may be grouped into two sets 136A and 136B. The structure airfoils 110 in the first airfoil set 136A are circumferentially interposed with the structure airfoils 110 in the second airfoil set 136B. Each structure airfoil 110 in the first airfoil set 136A of FIG. 6, for example, is disposed circumferentially between and is next to a respective circumferentially neighboring (e.g., adjacent) pair of the structure airfoils 110 in the second airfoil set 136B. Similarly, each structure airfoil 110 in the second airfoil set 136B of FIG. 6 is disposed circumferentially between and is next to a circumferentially neighboring (e.g., adjacent) pair of the structure airfoils 110 in the first airfoil set 136A.

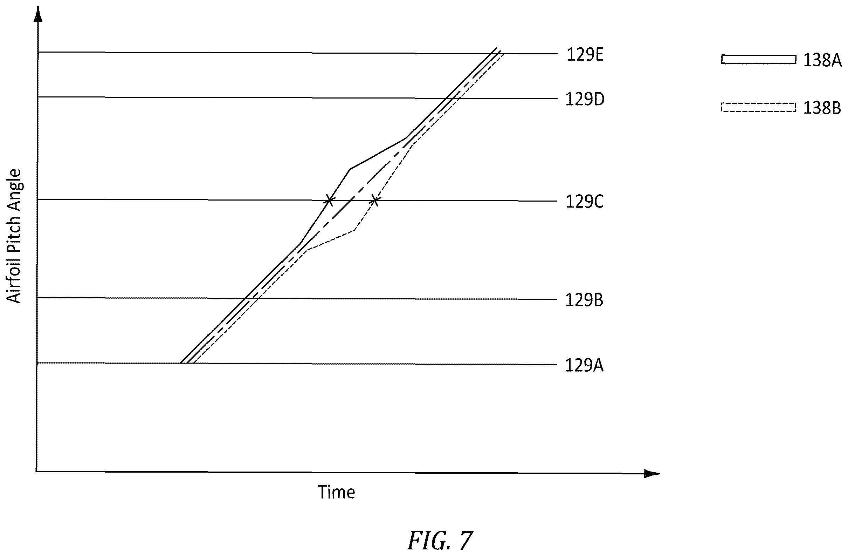

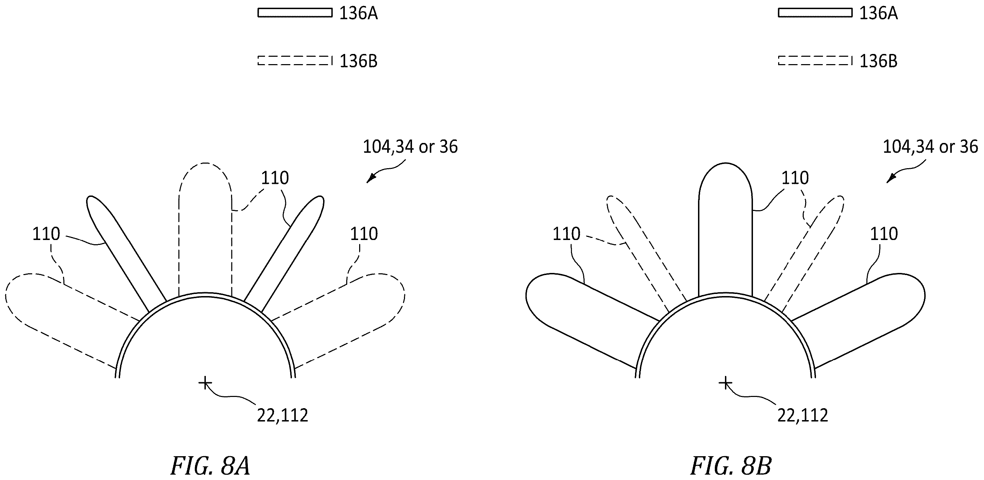

Referring generally to FIGS. 6 and 7, the airfoil actuation system 106 (see FIG. 2) may be configured to pivot each structure airfoil 110 in the first airfoil set 136A according to a first pitch schedule 138A. The airfoil actuation system 106 (see FIG. 2) may further be configured to pivot each structure airfoil 110 in the second airfoil set 136B according to a second pitch schedule 138B. The first pitch schedule 138A is tailored such that each structure airfoil 110 in the first airfoil set 136A (see FIG. 8A) pivoting in the second pivot direction passes through its feather pitch position 129C at a first point in time. The second pitch schedule 138B is tailored such that each structure airfoil 110 in the second airfoil set 136B (see FIG. 8B) pivoting in the second pivot direction passes through its feather pitch position 129C at a second point in time that is after the first point in time. With such schedules, the structure airfoils 110 in the first airfoil set 136A synchronously pivot through their feather pitch positions 129C before the structure airfoils 110 in the second airfoil set 136B synchronously pivot through their feather pitch positions 129C. By contrast, when the structure airfoils 110 are pivoted in the first pivot direction towards their forward thrust pitch positions 129A, the structure airfoils 110 in the second airfoil set 136B synchronously pivot through their feather pitch positions 129C before the structure airfoils 110 in the first airfoil set 136A synchronously pivot through their feather pitch positions 129C. By temporally spacing apart when the structure airfoils 110 pass through their feather pitch positions 129C, a magnitude of a torque spike and/or a drop in rotational speed may be significantly reduced compared to the baseline if all of the structure airfoils 110 were to synchronously pass through their feather pitch positions 129C.

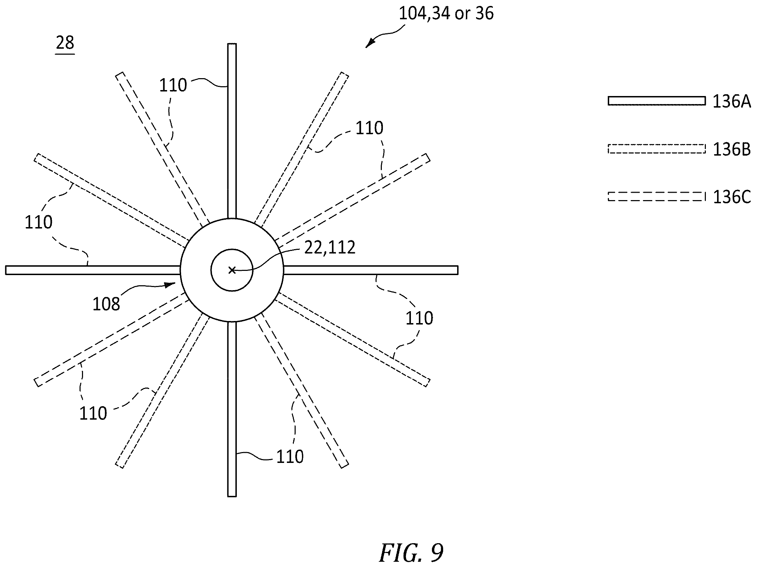

Referring to FIG. 9, the structure airfoils 110 in the array may be grouped into three sets 136A-C. The structure airfoils 110 in the first airfoil set 136A are circumferentially interposed with the structure airfoils 110 in the third airfoil set 136C and the structure airfoils 110 in the second airfoil set 136B. Each structure airfoil 110 in the first airfoil set 136A of FIG. 9, for example, is disposed circumferentially between and is next to a respective circumferentially neighboring one of the structure airfoils 110 in the third airfoil set 136C and a respective circumferentially neighboring one of the structure airfoils 110 in the second airfoil set 136B. Each structure airfoil 110 in the second airfoil set 136B of FIG. 9 is disposed circumferentially between and is next to a respective circumferentially neighboring one of the structure airfoils 110 in the first airfoil set 136A and a respective circumferentially neighboring one of the structure airfoils 110 in the third airfoil set 136C. Similarly, each structure airfoil 110 in the third airfoil set 136C of FIG. 9 is disposed circumferentially between and is next to a respective circumferentially neighboring one of the structure airfoils 110 in the second airfoil set 136B and a respective circumferentially neighboring one of the structure airfoils 110 in the first airfoil set 136A.

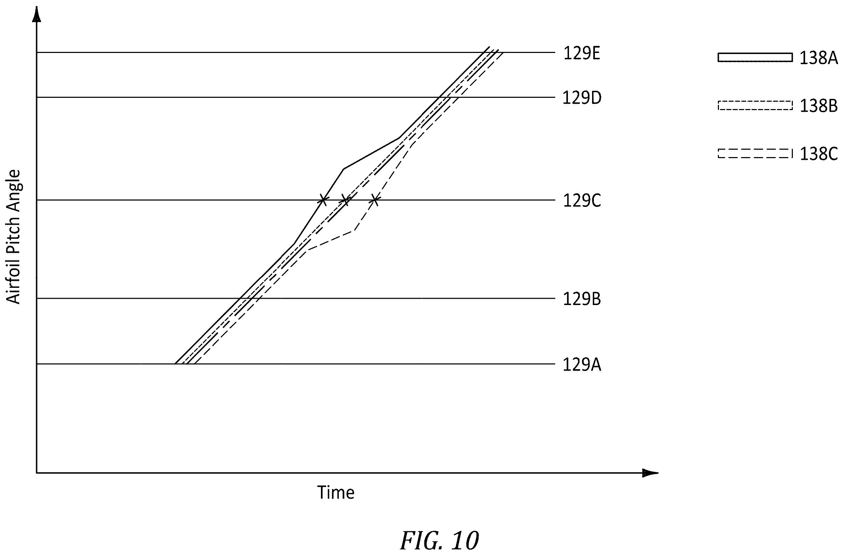

Referring generally to FIGS. 9 and 10, the airfoil actuation system 106 (see FIG. 2) may be configured to pivot each structure airfoil 110 in the first airfoil set 136A according to a first pitch schedule 138A. The airfoil actuation system 106 (see FIG. 2) may be configured to pivot each structure airfoil 110 in the second airfoil set 136B according to a second pitch schedule 138B. The airfoil actuation system 106 (see FIG. 2) may further be configured to pivot each structure airfoil 110 in the third airfoil set 136C according to a third pitch schedule 138C. The first pitch schedule 138A is tailored such that each structure airfoil 110 in the first airfoil set 136A pivoting in the second pivot direction passes through its feather pitch position 129C at a first point in time. The second pitch schedule 138B is tailored such that each structure airfoil 110 in the second airfoil set 136B pivoting in the second pivot direction passes through its feather pitch position 129C at a second point in time that is after the first point in time. The third pitch schedule 138C is tailored such that each structure airfoil 110 in the third airfoil set 136C pivoting in the second pivot direction passes through its feather pitch position 129C at a third point in time that is after the second point in time. With such schedules, the structure airfoils 110 in the first airfoil set 136A synchronously pivot through their feather pitch positions 129C before the structure airfoils 110 in the second airfoil set 136B synchronously pivot through their feather pitch positions 129C. In addition, the structure airfoils 110 in the second airfoil set 136B synchronously pivot through their feather pitch positions 129C before the structure airfoils 110 in the third airfoil set 136C synchronously pivot through their feather pitch positions 129C. By contrast, when the structure airfoils 110 are pivoted in the first pivot direction towards their forward thrust pitch positions 129A, the structure airfoils 110 in the third airfoil set 136C synchronously pivot through their feather pitch positions 129C before the structure airfoils 110 in the second airfoil set 136B synchronously pivot through their feather pitch positions 129C. In addition, the structure airfoils 110 in the second airfoil set 136B synchronously pivot through their feather pitch positions 129C before the structure airfoils 110 in the first airfoil set 136A synchronously pivot through their feather pitch positions 129C.

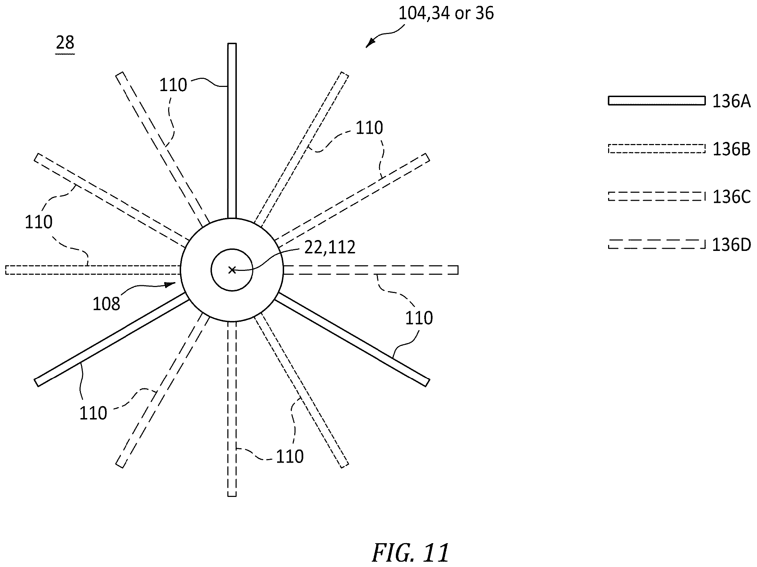

Referring to FIG. 11, the structure airfoils 110 in the array may be grouped into four sets 136A-D. The structure airfoils 110 in the first airfoil set 136A are circumferentially interposed with the structure airfoils 110 in the second airfoil set 136B, the structure airfoils 110 in the third airfoil set 136C and the structure airfoils 110 in the fourth airfoil set 136D. Each structure airfoil 110 in the first airfoil set 136A of FIG. 11, for example, is disposed circumferentially between and is next to a respective circumferentially neighboring one of the structure airfoils 110 in the fourth airfoil set 136D and a respective circumferentially neighboring one of the structure airfoils 110 in the second airfoil set 136B. Each structure airfoil 110 in the second airfoil set 136B of FIG. 11 is disposed circumferentially between and is next to a respective circumferentially neighboring one of the structure airfoils 110 in the first airfoil set 136A and a respective circumferentially neighboring one of the structure airfoils 110 in the third airfoil set 136C. Each structure airfoil 110 in the third airfoil set 136C of FIG. 11 is disposed circumferentially between and is next to a respective circumferentially neighboring one of the structure airfoils 110 in the second airfoil set 136B and a respective circumferentially neighboring one of the structure airfoils 110 in the fourth airfoil set 136D. Similarly, each structure airfoil 110 in the fourth airfoil set 136D of FIG. 11 is disposed circumferentially between and is next to a respective circumferentially neighboring one of the structure airfoils 110 in the third airfoil set 136C and a respective circumferentially neighboring one of the structure airfoils 110 in the first airfoil set 136A.

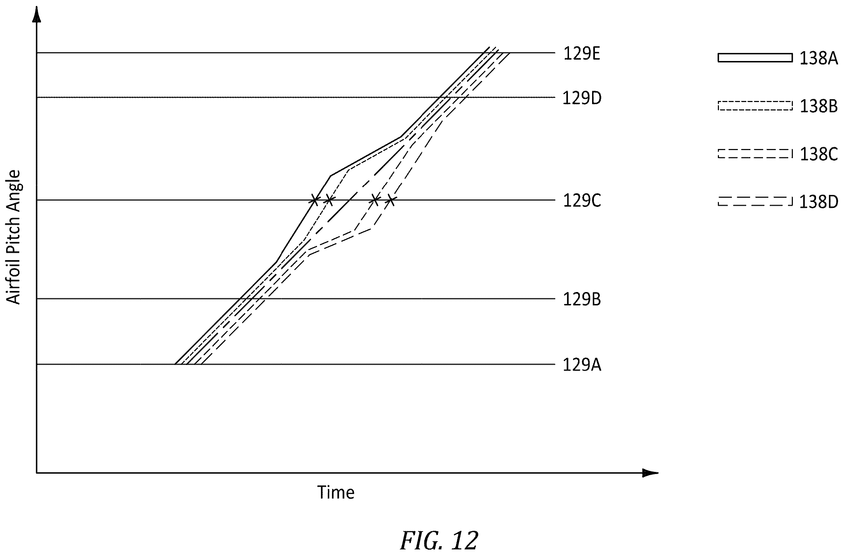

Referring generally to FIGS. 11 and 12, the airfoil actuation system 106 (see FIG. 2) may be configured to pivot each structure airfoil 110 in the first airfoil set 136A according to a first pitch schedule 138A. The airfoil actuation system 106 (see FIG. 2) may be configured to pivot each structure airfoil 110 in the second airfoil set 136B according to a second pitch schedule 138B. The airfoil actuation system 106 (see FIG. 2) may be configured to pivot each structure airfoil 110 in the third airfoil set 136C according to a third pitch schedule 138C. The airfoil actuation system 106 (see FIG. 2) may further be configured to pivot each structure airfoil 110 in the fourth airfoil set 136D according to a fourth pitch schedule 138D. The first pitch schedule 138A is tailored such that each structure airfoil 110 in the first airfoil set 136A pivoting in the second pivot direction passes through its feather pitch position 129C at a first point in time. The second pitch schedule 138B is tailored such that each structure airfoil 110 in the second airfoil set 136B pivoting in the second pivot direction passes through its feather pitch position 129C at a second point in time that is after the first point in time. The third pitch schedule 138C is tailored such that each structure airfoil 110 in the third airfoil set 136C pivoting in the second pivot direction passes through its feather pitch position 129C at a third point in time that is after the second point in time. The fourth pitch schedule 138D is tailored such that each structure airfoil 110 in the fourth airfoil set 136D pivoting in the second pivot direction passes through its feather pitch position 129C at a fourth point in time that is after the third point in time. With such schedules, the structure airfoils 110 in the first airfoil set 136A synchronously pivot through their feather pitch positions 129C before the structure airfoils 110 in the second airfoil set 136B synchronously pivot through their feather pitch positions 129C. The structure airfoils 110 in the second airfoil set 136B synchronously pivot through their feather pitch positions 129C before the structure airfoils 110 in the third airfoil set 136C synchronously pivot through their feather pitch positions 129C. In addition, the structure airfoils 110 in the third airfoil set 136C synchronously pivot through their feather pitch positions 129C before the structure airfoils 110 in the fourth airfoil set 136D synchronously pivot through their feather pitch positions 129C. By contrast, when the structure airfoils 110 are pivoted in the first pivot direction towards their forward thrust pitch positions 129A, the structure airfoils 110 in the fourth airfoil set 136D synchronously pivot through their feather pitch positions 129C before the structure airfoils 110 in the third airfoil set 136C synchronously pivot through their feather pitch positions 129C. The structure airfoils 110 in the third airfoil set 136C synchronously pivot through their feather pitch positions 129C before the structure airfoils 110 in the second airfoil set 136B synchronously pivot through their feather pitch positions 129C. In addition, the structure airfoils 110 in the second airfoil set 136B synchronously pivot through their feather pitch positions 129C before the structure airfoils 110 in the first airfoil set 136A synchronously pivot through their feather pitch positions 129C.

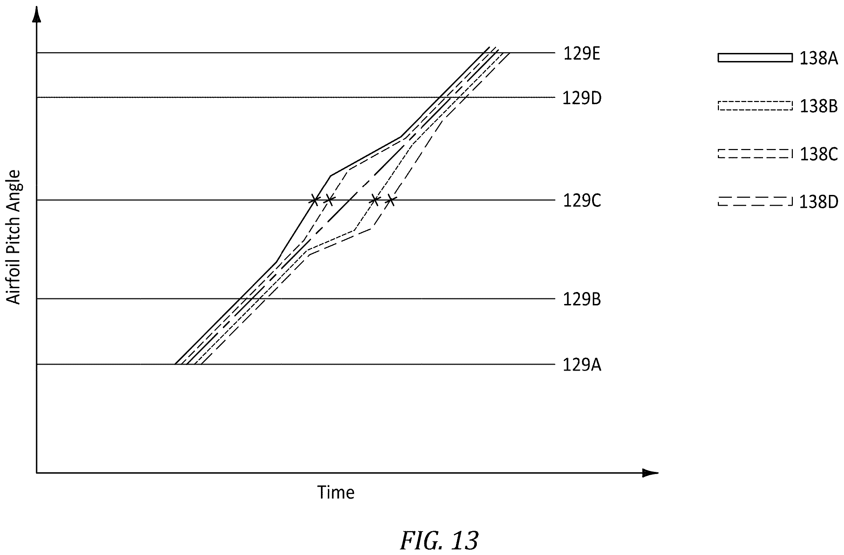

According to the pitch schedules of FIG. 12, the structure airfoils 110 in the airfoil sets sequentially pass through their respective feather pitch positions 129C as those structure airfoils 110 are pivoted in the second pivot direction by the airfoil actuation system 106. The present invention, however, is not limited to such exemplary scheduling. For example, timing of the second pitch schedule 138B and the third pitch schedule 138C from FIG. 12 may be reversed as shown in FIG. 13. With such schedules, referring generally to FIGS. 11 and 13, the structure airfoils 110 in the first airfoil set 136A synchronously pivot through their feather pitch positions 129C before the structure airfoils 110 in the third airfoil set 136C synchronously pivot through their feather pitch positions 129C. The structure airfoils 110 in the third airfoil set 136C synchronously pivot through their feather pitch positions 129C before the structure airfoils 110 in the second airfoil set 136B synchronously pivot through their feather pitch positions 129C. In addition, the structure airfoils 110 in the second airfoil set 136B synchronously pivot through their feather pitch positions 129C before the structure airfoils 110 in the fourth airfoil set 136D synchronously pivot through their feather pitch positions 129C. By contrast, when the structure airfoils 110 are pivoted in the first pivot direction towards their forward thrust pitch positions 129A, the structure airfoils 110 in the fourth airfoil set 136D synchronously pivot through their feather pitch positions 129C before the structure airfoils 110 in the second airfoil set 136B synchronously pivot through their feather pitch positions 129C. The structure airfoils 110 in the second airfoil set 136B synchronously pivot through their feather pitch positions 129C before the structure airfoils 110 in the third airfoil set 136C synchronously pivot through their feather pitch positions 129C. In addition, the structure airfoils 110 in the third airfoil set 136C synchronously pivot through their feather pitch positions 129C before the structure airfoils 110 in the first airfoil set 136A synchronously pivot through their feather pitch positions 129C.

Referring to FIGS. 7, 10, 12 and 13, the pitch schedules 138A, 138B, 138C and/or 138D (generally referred to as "138") may be tailored such that an average airfoil pitch of all of the structure airfoils 110 is equal to a control target as those structure airfoils 110 collectively pass through their feather pitch positions 129C. This control target may be selected to facilitate provision of a particular airfoil array structure rotational speed, a particular propulsion system thrust, a particular propulsion system power, etc. The present invention, however, is not limited thereto.

While the pitch schedules 138 described above facilitate asynchronous pivoting of the structure airfoils 110 in the various airfoil sets 136A, 136B, 136C and/or 136D (generally referred to as "136") through their feather pitch positions 129C, it is contemplated the structure airfoils 110 of some or all of the various airfoil sets 136 may be synchronously pivoted through and/or to other pitch positions. For example, the airfoil actuation system 106 of FIG. 2 may be configured to synchronously pivot some or all of the structure airfoils 110 through and/or to any one, some or all of the pitch positions: the forward thrust pitch position 129A of FIG. 5A; the transition forward thrust pitch position 129B of FIG. 5B; the transition reverse thrust pitch position 129D of FIG. 5D; and/or the reverse thrust pitch position 129E of FIG. 5E. In fact, it is contemplated a majority of structure airfoil pivoting may be synchronous to facilitate uniform (or substantially uniform) pitch adjustment during normal forward thrust operation and/or reverse thrust operation.

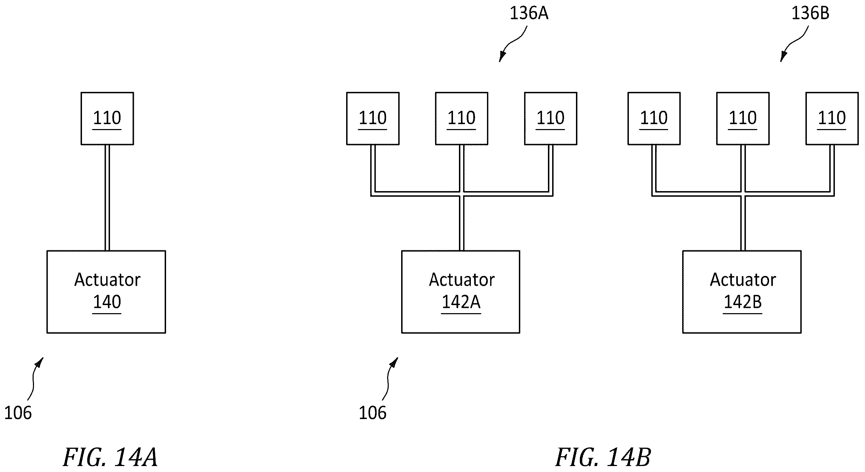

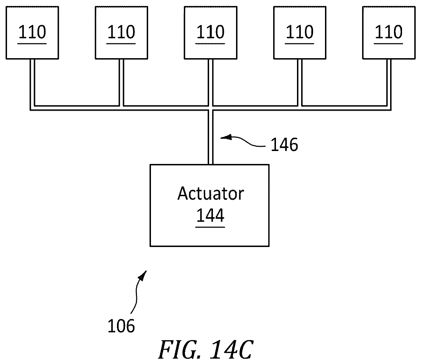

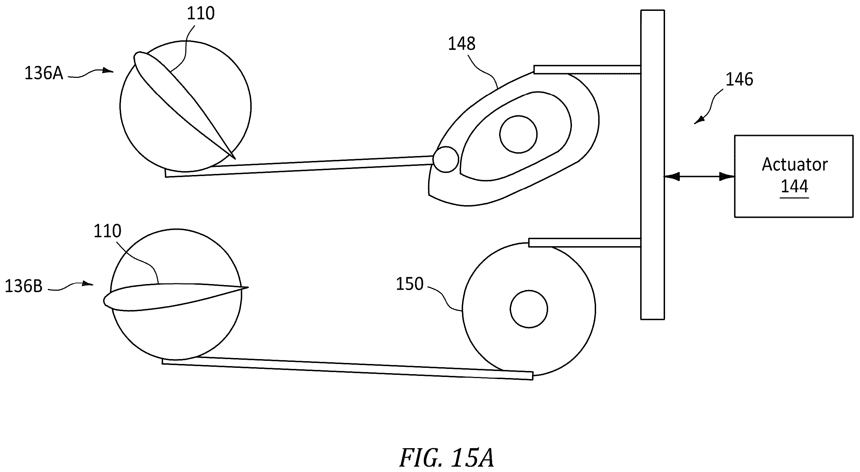

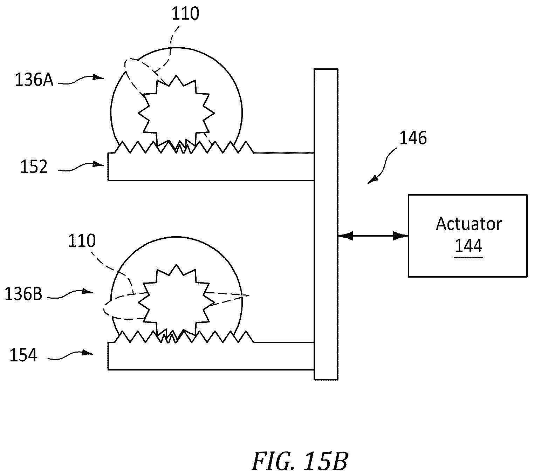

Referring to FIGS. 14A-C, the airfoil actuation system 106 may include one or more actuators (e.g., electric motor(s), fluid motor(s), linear actuator(s), etc.) operatively coupled to and configured to pivot the structure airfoils 110. For example, referring to FIG. 14A, the airfoil actuation system 106 may include a dedicated actuator 140 for each structure airfoil 110. With this arrangement, each actuator 140 may be individually operated to pivot the respective structure airfoil 110 according to the respective pitch schedule 138 (see FIGS. 7, 10, 12 and 13). In another example, referring to FIG. 14B, the airfoil actuation system 106 may include at least (or only) one dedicated actuator 142A and 142B for each respective set 136A and 136B of the structure airfoils 110. The first actuator 142A of FIG. 14B, for example, may be configured to collectively pivot the structure airfoils 110 in the first airfoil set 136A according to the first pitch schedule 138A (see FIGS. 7, 10, 12 and 13). The second actuator 142B of FIG. 14B may be configured to collectively pivot the structure airfoils 110 in the second airfoil set 136B according to the second pitch schedule 138B (see FIGS. 7, 10, 12 and 13). In still another example, referring to FIG. 14C, the airfoil actuation system 106 may include at least (or only) one actuator 144 for all of the structure airfoils 110. Here, a coupling 146 between the actuator 144 and each structure airfoil 110 (or set of the structure airfoils 110) may be configured to facilitate airfoil pivoting according to the respective pitch schedule 138 (see FIGS. 7, 10, 12 and 13). The actuator 144 of FIG. 15A, for example, is coupled to each structure airfoil 110 in the first airfoil set 136A through a first coupler 148 (e.g., a cam mechanism) configured to facilitate airfoil pivoting according to the first pitch schedule 138A (see FIGS. 7, 10, 12 and 13). The actuator 144 of FIG. 15A is coupled to each structure airfoil 110 in the second airfoil set 136B through a second coupler 150 (e.g., a crank) configured to facilitate airfoil pivoting according to the second pitch schedule 138B (see FIGS. 7, 10, 12 and 13). In another example, the actuator 144 of FIG. 15B is coupled to each structure airfoil 110 in the first airfoil set 136A through a first rack and pinion 152 configured with a first tooth pattern to facilitate airfoil pivoting according to the first pitch schedule 138A (see FIGS. 7, 10, 12 and 13). The actuator of FIG. 15B is coupled to each structure airfoil 110 in the second airfoil set 136B through a second rack and pinion 154 configured with a second tooth pattern to facilitate airfoil pivoting according to the second pitch schedule 138B (see FIGS. 7, 10, 12 and 13). The present invention, however, is not limited to the foregoing exemplary airfoil actuation system arrangements.

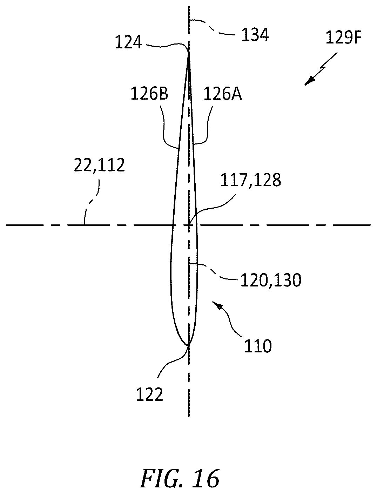

In some embodiments, pitch schedules such as those described above may alternatively (or also) be implemented to facilitate asynchronous pivoting of the structure airfoils 110 in the various airfoil sets through flat pitch positions 129F. In the flat pitch position 129F of FIG. 16, respective structure airfoil 110 may be arranged substantially perpendicular to the structure axis 112. For example, the chord line 130 of the respective structure airfoil 110 may be exactly or approximately (e.g., within +/- one degree) perpendicular with the structure axis 112. Of course, it is contemplated pitch schedules such as those described above may alternatively (or also) be implemented to facilitate asynchronous pivoting of the structure airfoils 110 in the various airfoil sets through one or more other positions; e.g., one or more forward thrust pitch positions and/or one or more reverse thrust pitch positions. By using an asynchronous pitch schedule such as those described above, the structure airfoils 110 may be moved through their flat pitch positions 129F while avoiding inter-airfoil clashing, particularly at base (e.g., root) regions of the structure airfoils 110.

In some embodiments, the propulsor rotor 34 may include at least (or only) nine (9) of the propulsor blades 42 in its array. In other embodiments, the propulsor rotor 34 may include twelve (12) or more of the propulsor blades 42 in its array.

The engine flowpath 66 of FIG. 1 extends longitudinally from the flowpath inlet 68, sequentially through the inlet section 58, the LPC section 59A, the HPC section 59B, the combustor section 60, the HPT section 61A, the LPT section 61B and the exhaust section 62, to the flowpath exhaust 70. The engine flowpath 66 of FIG. 1 is configured such that the core air and the combustion products generally flow in the aft, downstream direction towards the propulsion system aft end 26. The core air and the combustion products thereby flow along with the ambient air propelled by the rotating propulsor rotor 34 in a common axial direction - the downstream, aft direction. The turbine engine 32 of the present invention, however, is not limited to such an exemplary common flow engine arrangement. For example, the engine flowpath 66 may alternatively be configured such that the core air and the combustion products generally flow in a forward, upstream direction towards the propulsion system forward end 24. The core air and the combustion products may thereby flow in an opposite direction as the ambient air propelled by the rotating propulsor rotor 34. Here, the turbine engine 32 may have a reverse flow engine arrangement.

The aircraft propulsion system 20 of FIG. 1 and its propulsion section 30 are described above with a tractor configuration; e.g., where the propulsor rotor 34 is disposed at or otherwise near the propulsion system forward end 24. It is contemplated, however, the propulsion section 30 may alternatively be disposed at or otherwise near the propulsion system aft end 26 to provide a pusher fan configuration. Moreover, while the turbine engine 32 is described above with a particular two rotating structure arrangement, the present invention is not limited thereto. For example, the LPC rotor 72 may be omitted to configure the LPT rotor 75 as a power turbine (PT) rotor for the propulsor rotor 34. In another example, the turbine engine 32 may also include another rotating structure; e.g., an intermediate speed spool for the engine core 64.

The guide vane structure 36 is described above as a fixed (e.g., non-rotatable) guide vane structure. It is contemplated, however, the guide vane structure 36 may alternatively be selectively rotatable about the propulsion system axis 22. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 22); and (B) a single open rotor and swirl recovery vane (SRV) propulsion system during a single rotor mode of operation (e.g., when the propulsor rotor 34 is rotating and the structure 36 is rotationally fixed about the propulsion system axis 22). Note, when the guide vane structure 36 is configured to selectively rotate about the propulsion system axis 22, the moving guide vanes 48 operate as propulsor blades.

The aircraft propulsion system 20 of FIG. 1 and its propulsion section 30 are described as including the guide vane structure 36 with an SRV or SRB configuration. The present invention, however, is not limited to such an exemplary propulsion system configuration. For example, the aircraft propulsion system 20 may alternatively be configured without an open guide vane structure 36. The aircraft propulsion system 20 may thereby be configured as a single rotor (SR) open rotor propulsion system. In another example, the aircraft propulsion system 20 may be configured with a set of the open propulsor rotors (e.g., counter-rotating propulsor rotors) operatively coupled to the turbine engine 32 (see FIG. 1) through the geartrain 88. The aircraft propulsion system 20 may thereby be configured as a counter-rotating open rotor (CROR) propulsion system.

The structure airfoils 110 are generally described above as open airfoils (e.g., un-ducted airfoils) such as the propulsor blades 42 or the guide vanes 48 of FIG. 1. It is contemplated, however, the structure airfoils 110 may alternatively be ducted airfoils such as fan blades where the aircraft propulsion system 20 is alternatively configured as a turbofan propulsion system. The present invention therefore is not limited to open rotor propulsion systems.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft propulsion system (20), comprising:
a plurality of airfoils (110) arranged circumferentially around a centerline axis (22, 112) in an array, each of the plurality of airfoils (110) projecting radially outward from a respective airfoil base (108) to a respective airfoil tip (118), and the plurality of airfoils (110) including a first airfoil and a second airfoil (110); and
an actuation system (106) configured to pivot the first airfoil (110) about a first airfoil pivot axis (128) from a first airfoil first pitch position (129A), through a first airfoil feather pitch position (129C), to a first airfoil second pitch position (129E);
the actuation system (106) configured to pivot the second airfoil (110) about a second airfoil pivot axis (128) from a second airfoil first pitch position (129A), through a second airfoil feather pitch position (129C), to a second airfoil second pitch position (129E); and
the actuation system (106) configured to asynchronously schedule pivoting the first airfoil (110) through the first airfoil feather pitch position (129C) with pivoting the second airfoil (110) through the second airfoil feather pitch position (129C).

2. The assembly of claim 1, wherein:
the first airfoil (110) at the first airfoil first pitch position (129A) and the second airfoil (110) at the second airfoil first pitch position (129A) have a common first pitch angle (132); and
the actuation system (106) is configured to synchronously schedule pivoting the first airfoil (110) to the first airfoil first pitch position (129A) with pivoting the second airfoil (110) to the second airfoil first pitch position (129A).

3. The assembly of claim 1 or 2, wherein:
the first airfoil (110) at the first airfoil second pitch position (129E) and the second airfoil (110) at the second airfoil second pitch position (129E) have a common second pitch angle (132); and
the actuation system (106) is configured to synchronously schedule pivoting the first airfoil (110) to the first airfoil second pitch position (129E) with pivoting the second airfoil (110) to the second airfoil second pitch position (129E).

4. The assembly of any preceding claim, wherein:
the actuation system (106) is configured to pivot the first airfoil (110) about the first airfoil pivot axis (128) from the first airfoil first pitch position (129A), through a first airfoil first intermediate pitch position (129B), to the first airfoil feather pitch position (129C);
the actuation system (106) is configured to pivot the second airfoil (110) about the second airfoil pivot axis (128) from the second airfoil first pitch position (129A), through a second airfoil first intermediate pitch position (129B), to the second airfoil feather pitch position (129C);
the actuation system (106) is configured to synchronously schedule pivoting the first airfoil (110) through the first airfoil first intermediate pitch position (129B) with pivoting the second airfoil (110) through the second airfoil first intermediate pitch position (129B); and
the first airfoil (110) at the first airfoil first intermediate pitch position (129B) and the second airfoil (110) at the second airfoil first intermediate pitch position (129B) have a common first intermediate pitch angle (132).

5. The assembly of any preceding claim, wherein the first airfoil (110) circumferentially neighbors the second airfoil (110) within the array.

6. The assembly of any preceding claim, wherein:
the plurality of airfoils (110) further include a third airfoil (110) with the second airfoil (110) circumferentially between and next to the first airfoil (110) and the third airfoil (110);
the actuation system (106) is configured to pivot the third airfoil (110) about a third airfoil pivot axis (128) from a third airfoil first pitch position (129A), through a third airfoil feather pitch position (129C), to a third airfoil second pitch position (129E); and
the actuation system (106) is configured to asynchronously schedule pivoting the third airfoil (110) through the third airfoil feather pitch position (129C) with pivoting the second airfoil (110) through the second airfoil feather pitch position (129C).

7. The assembly of claim 6, wherein the actuation system (106) is configured to synchronously schedule pivoting the third airfoil (110) through the third airfoil feather pitch position (129C) with pivoting the first airfoil (110) through the first airfoil feather pitch position (129C).

8. The assembly of claim 6, wherein the actuation system (106) is configured to asynchronously schedule pivoting the third airfoil (110) through the third airfoil feather pitch position (129C) with pivoting the first airfoil (110) through the first airfoil feather pitch position (129C).

9. The assembly of any of claims 6 to 8, wherein:
the plurality of airfoils (110) further include a fourth airfoil (110) with the third airfoil (110) circumferentially between and next to the second airfoil (110) and the fourth airfoil (110);
the actuation system (106) is configured to pivot the fourth airfoil (110) about a fourth airfoil pivot axis (128) from a fourth airfoil first pitch position (129A), through a fourth airfoil feather pitch position (129C), to a fourth airfoil second pitch position (129E); and
the actuation system (106) is configured to asynchronously schedule pivoting the fourth airfoil (110) through the fourth airfoil feather pitch position (129C) with pivoting the third airfoil (110) through the third airfoil feather pitch position (129C).

10. The assembly of claim 9, wherein the actuation system (106) is configured to:
asynchronously schedule pivoting the third airfoil (110) through the third airfoil feather pitch position (129C) with pivoting the first airfoil (110) through the first airfoil feather pitch position (129C); and
synchronously schedule pivoting the fourth airfoil (110) through the fourth airfoil feather pitch position (129C) with pivoting the first airfoil (110) through the first airfoil feather pitch position (129C).

11. The assembly of claim 9, wherein the actuation system (106) is configured to:
asynchronously schedule pivoting the third airfoil (110) through the third airfoil feather pitch position (129C) with pivoting the first airfoil (110) through the first airfoil feather pitch position (129C); and
asynchronously schedule pivoting the fourth airfoil (110) through the fourth airfoil feather pitch position (129C) with at least one of
pivoting the first airfoil (110) through the first airfoil feather pitch position (129C); or
pivoting the second airfoil (110) through the second airfoil feather pitch position (129C).

12. The assembly of any preceding claim, further comprising:
a propulsor rotor (34) comprising the plurality of airfoils (110); and
a turbine engine core (64) configured to power rotation of the propulsor rotor (34) about the centerline axis (22, 112), the turbine engine core (64) including a flowpath (66), a compressor section (59), a combustor section (60) and a turbine section (61), and the flowpath (66) extending through the compressor section (59), the combustor section (60) and the turbine section (61) from an airflow inlet (68) into the flowpath (66) to a combustion products exhaust (70) from the flowpath (66).

13. The assembly of any preceding claim, further comprising an open propulsor rotor (34) rotatable about the centerline axis (22, 112), the open propulsor rotor (34) comprising the plurality of airfoils (110).
